(19)

Europäisches
Patentamt

European
Patent Office

Office européen
des brevets

(11) **EP 4 067 853 B1**

(12) **EUROPEAN PATENT SPECIFICATION**

(45) Date of publication and mention
of the grant of the patent:
**20.08.2025   Bulletin 2025/34**

(21) Application number: **21166244.0**

(22) Date of filing: **31.03.2021**

(51) International Patent Classification (IPC):
***G01L 19/00*** *(2006.01)*        ***G01L 19/06*** *(2006.01)*

(52) Cooperative Patent Classification (CPC):
**G01L 19/0023; G01L 19/0627**

(54) **SEPARATING PRESSURE TRANSDUCER FOR MEASURING PRESSURE IN A POLLUTED ENVIRONMENT**

TRENNDRUCKWANDLER ZUR DRUCKMESSUNG IN EINER VERSCHMUTZTEN UMGEBUNG

SÉPARATION DE TRANSDUCTEUR DE PRESSION POUR MESURER LA PRESSION DANS UN ENVIRONNEMENT POLLUÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.10.2022   Bulletin 2022/40**

(73) Proprietor: **Pittway Sarl**
**1180 Rolle (CH)**

(72) Inventors:
• **KEJIK, Pavel**
  **1180 Rolle (CH)**
• **KOBLIZEK, Petr**
  **1180 Rolle (CH)**

• **KLIMA, Martin**
  **1180 Rolle (CH)**
• **VOLAVY, Jaroslav**
  **1180 Rolle (CH)**
• **MARIANI, Fabio**
  **1180 Rolle (CH)**
• **NICHOLS, Alita**
  **1180 Rolle (CH)**
• **ALJABARI, Mohammad A**
  **1180 Rolle (CH)**

(74) Representative: **Murgitroyd & Company**
**165-169 Scotland Street**
**Glasgow G5 8PL (GB)**

(56) References cited:
**EP-A2- 1 081 435     US-A- 5 456 124**

## Description

### Technical Field

This invention relates to pressure sensing in polluted environments. In particular, the invention relates to a device and method for measuring pressure inside a hollow member, such as a chimney, flue or the like, while separating the pressure transducer from the pollutions present in the polluted environment within the chimney, flue or the like.

### Background

It is widely known that pressurised systems require the pressure to be measured and monitored for a variety of reasons. For example, a closed pressure system having pressures above or below atmospheric pressure may need to be monitored for safety or efficiency reasons. Other systems and reasons will be apparent to the appropriate person skilled in the art based on the application of the pressurised system. Nevertheless, some of these pressurised systems may be subject to an aggressive environment, such that the chemicals and/or particles within the environment have an impact on the pressure sensing device. These environments can have detrimental effects on the operations and the longevity of the sensing element within the pressure sensing device. As such, a reduction in measuring efficiency and operating lifetime of the sensor is common in some pressurised systems, leading to an increase in the frequency of repairs or replacement of the pressure sensing device. Alternatively or in addition thereto, the prior art teaches the use of encapsulated or otherwise protected pressure sensing devices for increasing the resistance against said chemicals and/or particles in the environment in which the pressure is to be sensed. Therefore, there is a need to improve the operating efficiency of pressure sensing devices over the device lifetime while increasing the operational lifetime of the device.

From US 5 456 124 A it is known to measure exhaust gas constituents by sampling with a capillary tube, which is controllably heated to avoid distortion of the reading due to condensation. EP 1 081 435 A2 relates to a device for operating a heating system comprising a sensor, measuring the pressure of the exhaust gas.

### Summary of Invention

It is an object of the invention to provide a pressure sensing devices and methods for sensing pressure for use in polluted environments with increased operational lifetime while maintaining high pressure measuring efficiency of the associated pressurised system according to the appended claims. The invention is further directed to computer-readable media having computer-executable instructions adapted to cause a 3D printer to print the pressure sensing devices according to the invention.

### Brief Description of the Drawings

Fig. 1 shows a diagram of the pressure sensor device with the elongated hollow member, an opening to the atmosphere, an opening connectable to a chimney or flue, and the pressure sensing element shown.

Figs. 2a-c represent 2D and 3D graphical pressure simulation results measured at the pressure sensing element wherein the diameter and length of the pipe have been modified over a selected range, $D_{pipe}$ is 3-9 mm and $L_{pipe}$ is 300-900 mm, while keeping other variables constant.

Fig. 3 is a 3D graph of simulation results wherein the length of the pipe, $L_{pipe}$ is changed from 0 mm to 5000 mm and the diameter, $D_{pipe}$ is changed from 3 mm to 9 mm, while keeping other variables constant.

Figs. 4a-c represent 2D and 3D graphical pressure simulation results wherein the diameter of the orifice, $D_{orifice}$ is altered over the selected length and diameter of the pipe, $D_{pipe}$ is 3-9 mm and $L_{pipe}$ is 300-900 mm, while keeping other variables constant.

Figs. 5a-c show plots of pressure simulation results wherein the pressure in the chimney is change from -25Pa to -50Pa, and the length and diameter of the pipe is altered, while keeping other variables constant.

Figs. 6a-c show plots of pressure simulation results with the decreased chimney pressure, - 50Pa, and with the diameter of the orifice, $D_{orifice}$, altered over the selected length and diameter of the pipe, $D_{pipe}$ is 3-9 mm and $L_{pipe}$ is 300-900 mm, while keeping other variables constant.

Figs. 7a-c show plots of pressure simulation results for a chimney pressure of -250Pa over the selected length and diameter of the pipe, $D_{pipe}$ is 3-9 mm and $L_{pipe}$ is 300-900 mm, while keeping other variables constant.

Figs. 8a-c show plots of pressure simulation results with the decreased chimney pressure, - 250Pa, and with the diameter of the orifice, $D_{orifice}$, altered over the selected length and diameter of the pipe, $D_{pipe}$ is 3-9 mm and $L_{pipe}$ is 300-900 mm, while keeping other variables constant.

Figs. 9a-d represent 2D and 3D graphical pressure simulation results for a range of chimney pressures, from -25Pa to -2500Pa, with Figs. 9a-c highlighting the 95% of chimney pressure value.

Fig. 10 shows a graph of optimum values of the pipe length and diameter for a chimney pressure of -25Pa and an orifice diameter of 0.4mm.

Figs. 11a-i shows the error in pressure reading for 3 selected pipe and orifice values over the range of chimney pressure of -25Pa to -2500Pa. Figs 11c, f and i are logarithmic graphs of the graphs in Figs. 11b, e and h.

Figs. 12a and b are diagrams of the pressure variations within the pressure sensing device for optimum pipe and orifice parameters. Both the inline (Fig. 12a) and L-shaped (Fig. 12b) configurations are shown.

Figs. 13a and b are diagrams of the velocity variations within the pressure sensing device for optimum pipe and orifice parameters. Both the inline (Fig. 13a) and L-shaped (Fig. 13b) configurations are shown.

## Detailed Description

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

The present invention is directed to a pressure sensing device according to claim 1, a method in accordance with claim 13 and a computer readable medium in accordance with claim 14. Various features and advantages of the invention will be apparent from the dependent claims and are set forth in part in the following description and figures.

The pressure sensing device comprises:

a first elongated hollow member comprising
a first opening located at a first end of the first elongated hollow member,
a second opening located at a second end opposite to the first end of the elongated hollow member;
a third opening located at between the first and the second end of the first elongated hollow member, and
a second elongated hollow member, the second elongate hollow member being connected to the first elongated hollow member via the third opening, wherein
the first opening being configured to connect the inside of the second elongated member to the inside of a third hollow member;
one of the free end of the second elongated member or third opening configured to open out to external atmospheric pressure through an aperture; and
a pressure sensing element being connected to the other one of the free end of the second elongated member or the third opening.

According to the claimed invention the aperture has a diameter ($D_{orifice}$) of maximum 1.2 mm.

In an embodiment of the pressure sensing device according to the present invention, the size of the aperture may be between 0.4 mm and 1.2 mm, preferably 0.4 mm, 0.5 mm, 0.6 mm, 0.7 mm, 0.8 mm, 0.9 mm, 1.0 mm, 1.1 mm or 1.2 mm. According to the claimed invention the aperture is formed by an orifice plate.

In an embodiment of the pressure sensing device according to the present invention, the pressure to be measured inside the third hollow member may be under pressure, below 0 Pa, preferably not exceeding -47200 Pa, more preferably in the range of -25 Pa to -2500Pa.

In an embodiment of the pressure sensing device according to the present invention, the first elongated hollow member may comprises a first portion with a first length and a first inner diameter and a second portion with a second length and a second inner diameter. In addition thereto, the first portion may be located at the first end of the first elongated hollow member. As such, the first portion may comprise the first opening and may therefore be connected to the inside of the flue. Further, the inner diameter of the first portion may be different from the inner diameter of the second portion, preferably the first inner diameter of the first portion may be bigger than the second inner diameter. The first inner diameter of the first portion may be dependent from the first length of the first portion and may also be dependent from the size of the aperture.

In an embodiment of the pressure sensing device according to the present invention, the inner diameter of the first portion may have any size between 3 mm and 9 mm, preferably between 4 mm and 6 mm, more preferably 5 mm. In addition thereto, the length of the first portion may be up to 5000 mm, preferably between 300 mm and 900 mm, more preferably 600 mm.

In an embodiment of the pressure sensing device according to the present invention, the inner diameter of the second portion may be approximately 3 mm. In addition thereto, the length of the second portion may not be more than 50 mm.

In an embodiment of the pressure sensing device according to the present invention, the pressure sensing element may be connected to the free end of the second elongated member and the third opening is configured to open out to external atmospheric pressure with the aperture.

In an embodiment of the pressure sensing device according to the present invention, the third hollow member may be a flue.

In an aspect, the present invention is further directed to a method for measuring pressure in a flue, the method comprising positioning a pressure sensing element outside a flue using a pressure sensing device as described above.

In an aspect the present invention is further directed to a computer-readable medium having computer-executable instructions adapted to cause a 3D printer to print a pressure sensing device as describe above.

In the following the invention will be described in more detail with reference to the drawings.

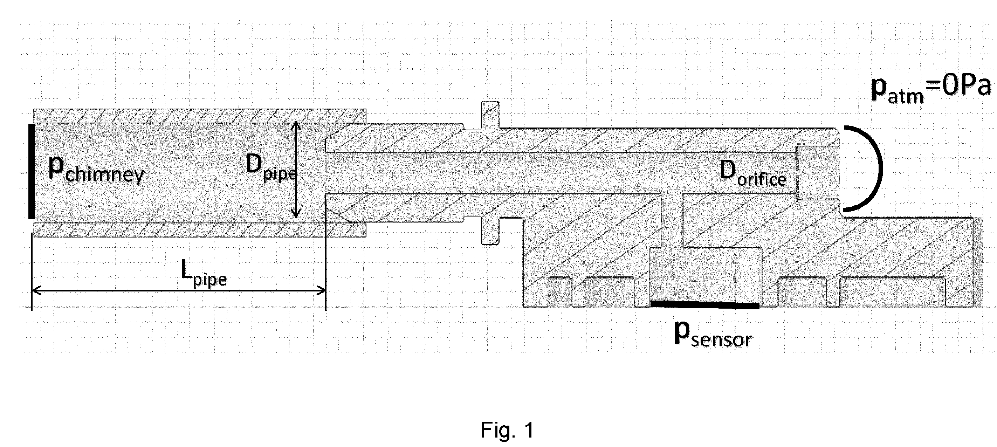

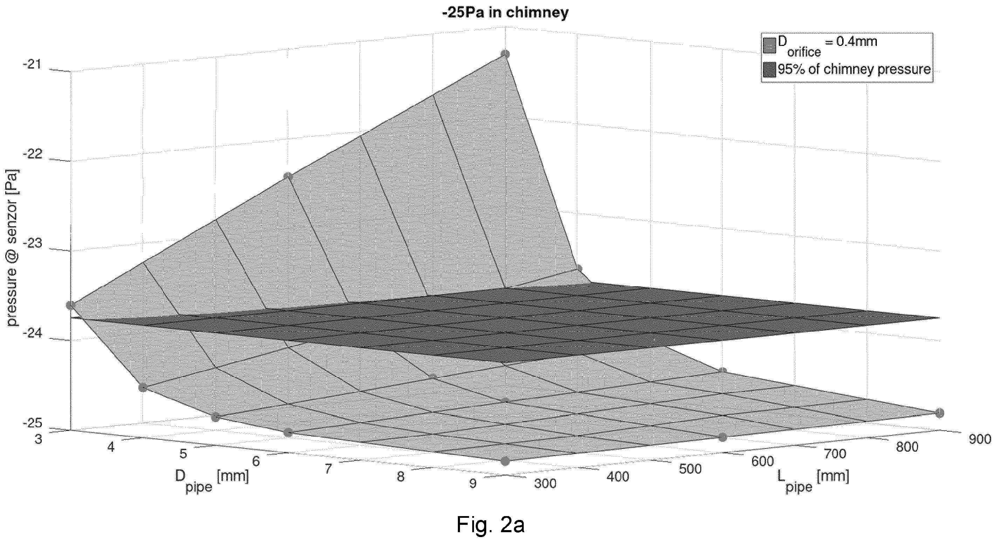

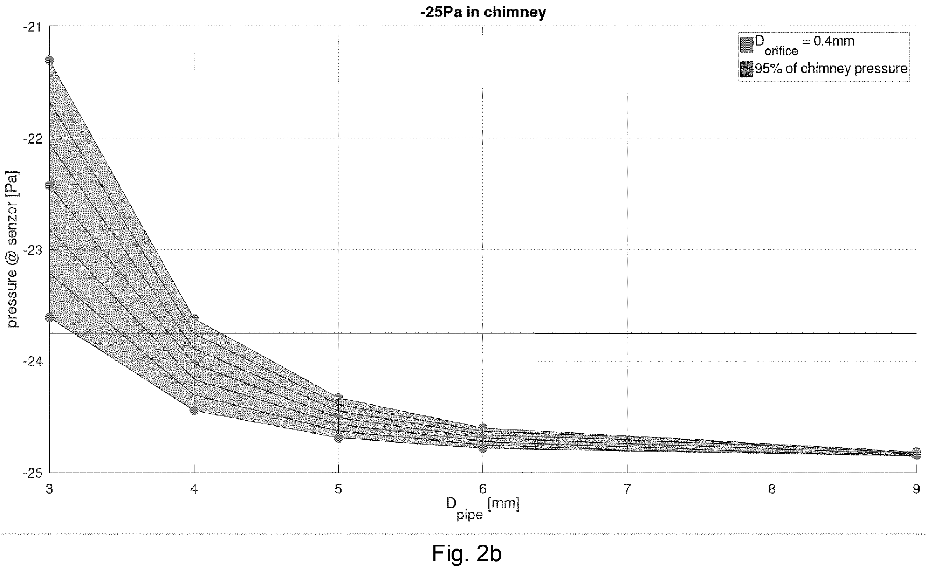

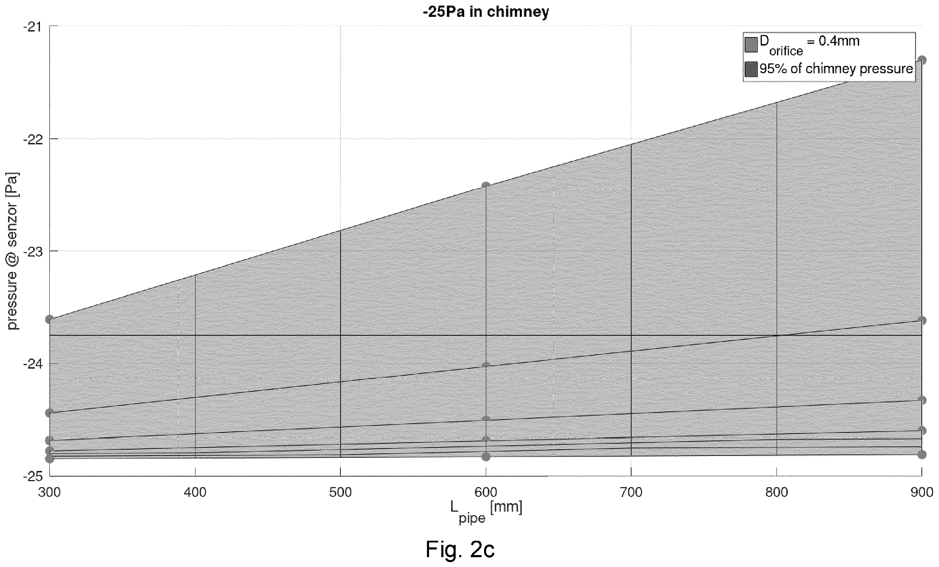

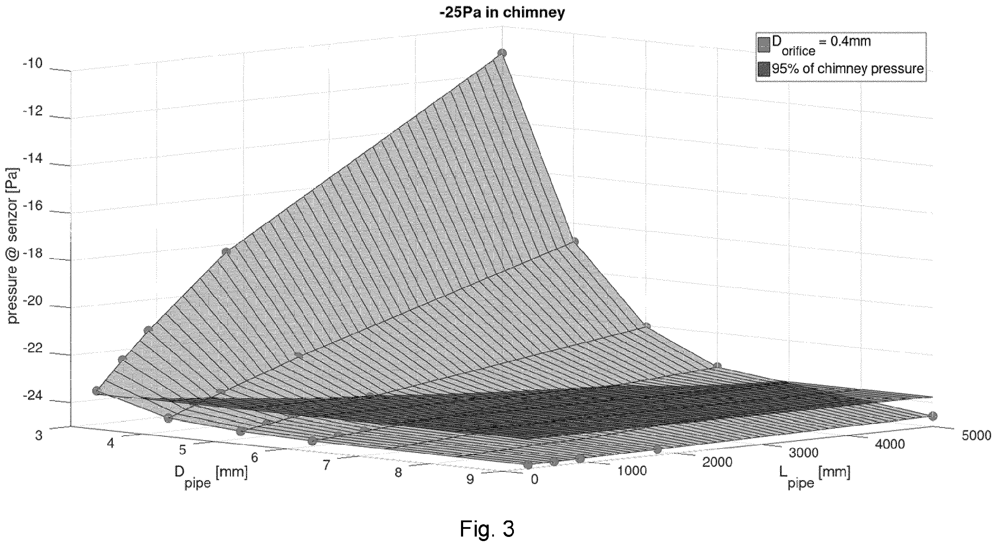

Fig. 1 provides a diagram of a pressure sensing device as described throughout this document as a preferred embodiment. Fig. 1 illustrates that the device can be connected to a flue-like system, for example chimney, pipe, exhaust, etc, for measuring the pressure within such a flue. A first opening of the device allows a connection into a flue and is illustrated by the opening at the end of an elongated hollow member on the left of the diagram, $P_{chimney}$. On the opposite side of the first opening, $P_{chimney}$, there is a second opening which is open to the external atmosphere and is indicated by $P_{atm}$ in the diagram. This second opening allows for air to be injected into the device providing an atmospheric flow of air fluid into the elongated hollow member part of the device. As such, the injection of air entering the device through the aperture compensates for diffusion of aggressive chemicals and/or particles from inside the flue into the pressure sensing device. The second opening is representative of an orifice or aperture or the like and as such forming an orifice plate being part of the pressure sensing device. The first elongated hollow member comprises a first and a second portion, wherein the length and inner diameter of the first portion is varied and the length and inner diameter of the second portion is held constant. As illustrated in Fig.1, the first portion of the elongated member may have a larger inner diameter than the second portion of the elongated member and the length of the first portion may be shorter or longer or substantially the same as the second portion of the elongated hollow member. It is preferable that the length of the second portion should be no more than 50 mm, with an internal diameter of 3 mm. If the second portion is longer than 50 mm with an inner diameter of 3 mm it will affect the accuracy of the pressure measurement. However, if the inner diameter of the second portion is increased the length may also be increased without affecting the accuracy of the pressure measurement. The important relationship between the length and inner diameter of the elongated hollow member is discussed further for the first portion, in relation to Figs. 2 and 3. A second elongated hollow member is connected to the first elongated hollow member between the first and second openings, i.e. between $P_{chimney}$ and $P_{atm}$, via a third opening in the first elongated hollow member as shown in Fig. 1. The free end of the second elongated hollow member which is not connected to the first elongated hollow member is connected to a pressure sensing element. The pressure sensing element is indicated by $P_{sensor}$, in the diagram of Fig. 1. This is referred to as the inline configuration of the pressure sensing device. The pressure sensing element may be a pressure transducer, pressure transmitter, pressure sender, pressure indicator, or the like. In another configuration of the device the pressure sensing element and the second opening, i.e. the orifice, are switched, resulting in an L-shaped configuration. For example, the sensing element is positioned opposite the first opening of the first elongated hollow member at the second opening of the first elongated hollow member and the opening to the atmosphere represented by an orifice is at the free end of the second elongated hollow member. It will be realised by the skilled person that the same technical effect of protecting the sensing element from the polluted environment will be achieved for both configurations of the pressure sensing device. In a preferred embodiment the distance in the second portion of the elongated hollow member between the second elongated member and the orifice (or sensor depending on configuration) is at least 10 mm.

In order to determine the optimum parameters of the device, such that the pressure sensing element is protected while still providing an accuracy reading of the pressure within the flue the accuracy preferably being >95%, the diameter and length of the first portion of the first elongated hollow member, and the diameter of the aperture opening to the external atmosphere at $P_{atm}$, are varied. The parameters relating to the second portion of the elongated hollow member are held constant throughout the varied simulations, with the length fixed at 50 mm, the diameter fixed at 3 mm and the distance between the orifice and sensor fixed at 10 mm. The effect of the selected device parameters on the pressure measurement of the flue as measured by the pressure sensing element is also determined for the preferred embodiment by varying the pressure within the flue. As such the parameters of respective devices may be adapted to and optimized for specific applications, i.e. the measurement of specific pressure ranges in a flue. These results will be discussed in the following paragraphs in relation to Figs. 2-11. For ease of reference in discussing the upcoming figures, the first portion of the first elongated hollow member will be referred to as a pipe, the opening to the atmosphere will be referred to as an orifice, the pressure sensing element will be referred to as a sensor, and the flue will be referred to as chimney.

Figs. 2a-c represent the variation in pressure measured by the sensor when the pipe length and diameter are varied, while keeping the other parameters constant. The chimney pressure, $P_{chimney}$, is held constant at -25 Pa and the diameter of the orifice, $D_{orifice}$, is held constant at 0.4 mm. The diameter of the pipe, $D_{pipe}$, is varied between 3-9 mm and the length of the pipe, $L_{pipe}$, is varied between 300-900 mm, as shown in Figs 2a-c. The 3D plot in Fig. 2a shows the variation in pressure measured by the sensor for the aforementioned conditions. The 95% accuracy of the pressure measured is highlighted by the 2D profile at -23.75 Pa in Fig. 2a. Similarly, Figs. 2a and 2b show the variation in pressure for change in pipe diameter and change in pipe length, respectively. Again the 95% accuracy reading is highlighted by the constant line at -23.75 Pa in both plots. It is clear that decreasing the diameter of the pipe and increasing the length results in a higher deviation of pressure measured at the sensor from the pressure set at the chimney, $P_{chimney}$,. However, the length of pipe has a low effect on the pressure reading at the sensor for a pipe with a diameter of higher than approximately 6 mm, within the 3-9 mm range simulated.

In order to establish if the accuracy is maintained for lengths of pipe higher than 900 mm, the pipe length parameter is varied up to 5000 mm while maintaining the same values for the other parameters as illustrated in the 3D plot in Fig. 3. It is clear in Fig. 3 that the pipe length has no effect on the pressure measurement of the sensor for pipe diameter, $D_{pipe}$, of approximately 6-9 mm. Thus, a pressure sensing device with an orifice diameter, $D_{orifice}$, of 0.4 mm and a pipe diameter, $D_{pipe}$, of approximately 6-9 mm can comprise any length of pipe, up to 5000 mm, while providing an accurate pressure measurement reading and protecting the sensor from the polluted environment within the chimney.

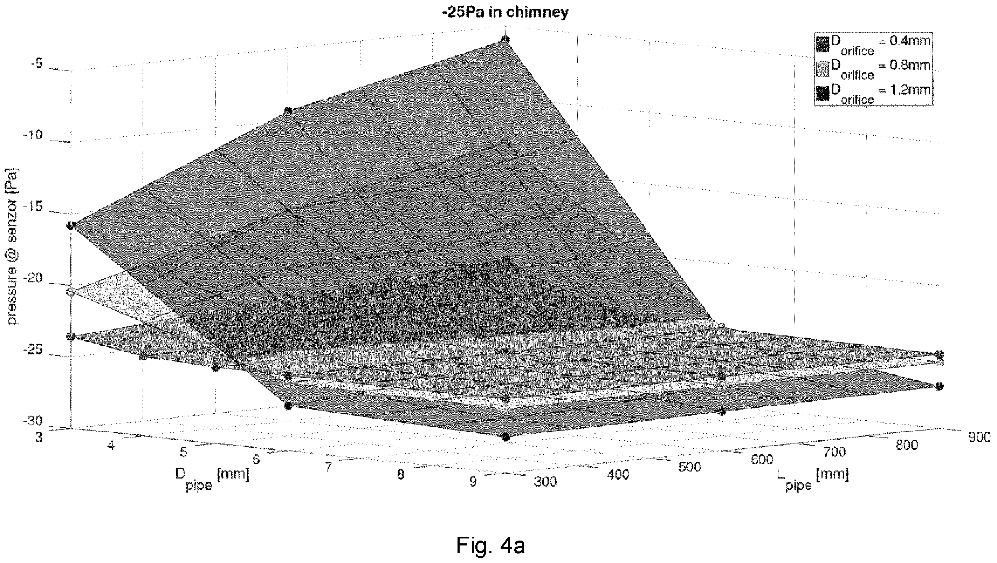

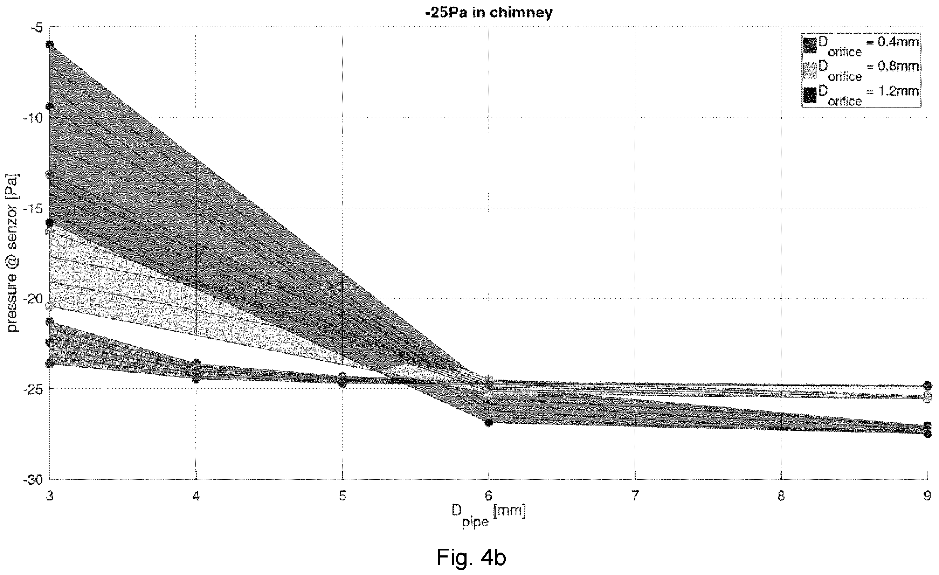

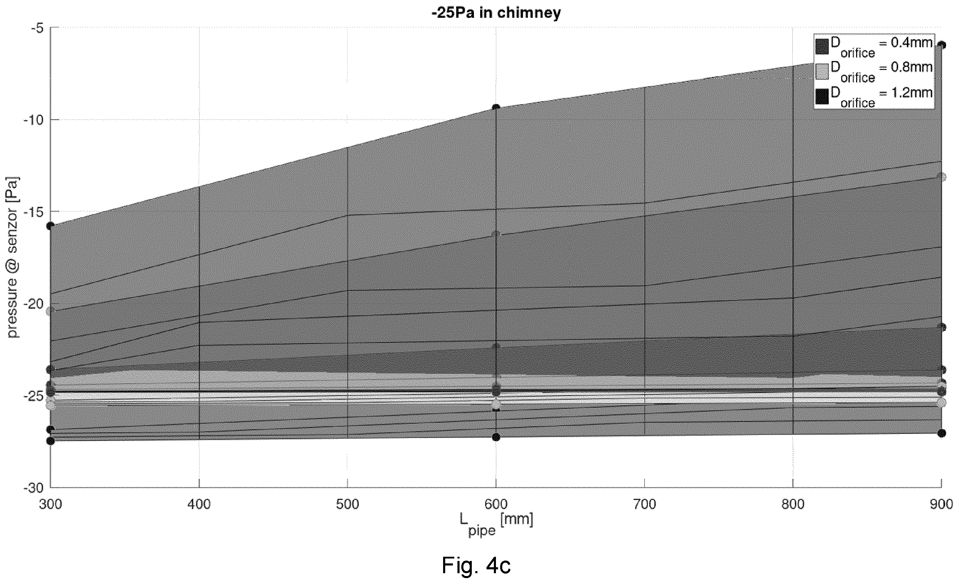

Figs. 4a-c illustrate the effects on the pressure measured at the sensor for variations in the orifice diameter, $D_{orifice}$. Fig. 4a shows a 3D plot of the variation in the pressure for 3 different orifice diameter values over a selected range of pipe parameters. Namely, the sensor pressure is measured for an orifice diameter, $D_{orifice}$, of 0.4 mm, 0.8 mm and 1.2 mm, over a pipe diameter, $D_{pipe}$, range 3-9 mm and a pipe length, $L_{pipe}$, 300-900 mm. The pressure in the chimney, $P_{chimney}$, is held constant at -25 Pa. The results show that an increase in orifice diameter, $D_{orifice}$, reduces the accuracy in the pressure reading at the sensor. Fig. 4a clearly illustrates that the pressure measurement for 1.2 mm orifice diameter measures below and above the -25 Pa pressure value of the chimney for all pipe diameters simulated. The same is seen in Fig. 4c for all pipe lengths in the simulated range. Therefore, an orifice diameter, $D_{orifice}$, between 0.4 mm and 0.8 mm provides for acceptable pressure readings for a pipe diameter higher than approximately 7 mm and for all pipe lengths.

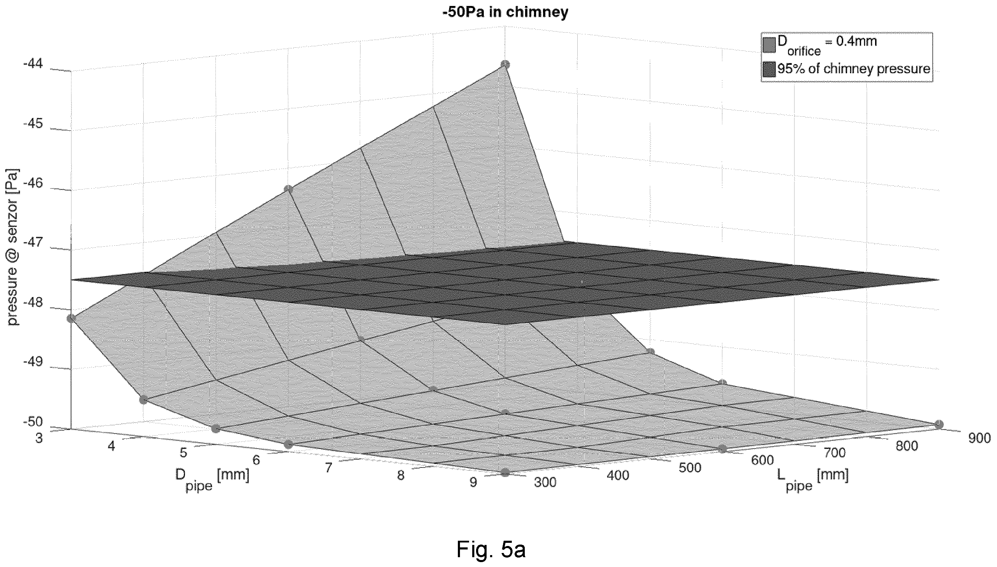

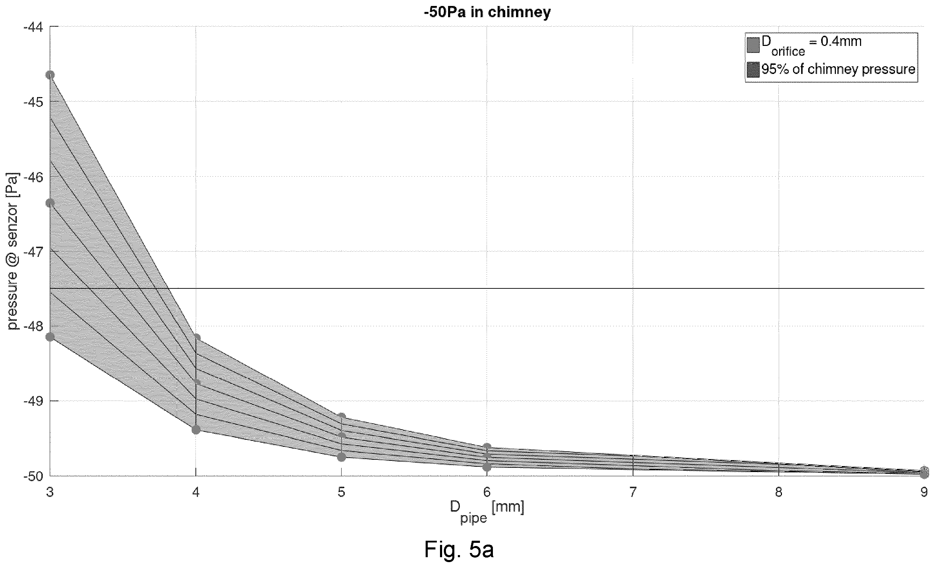

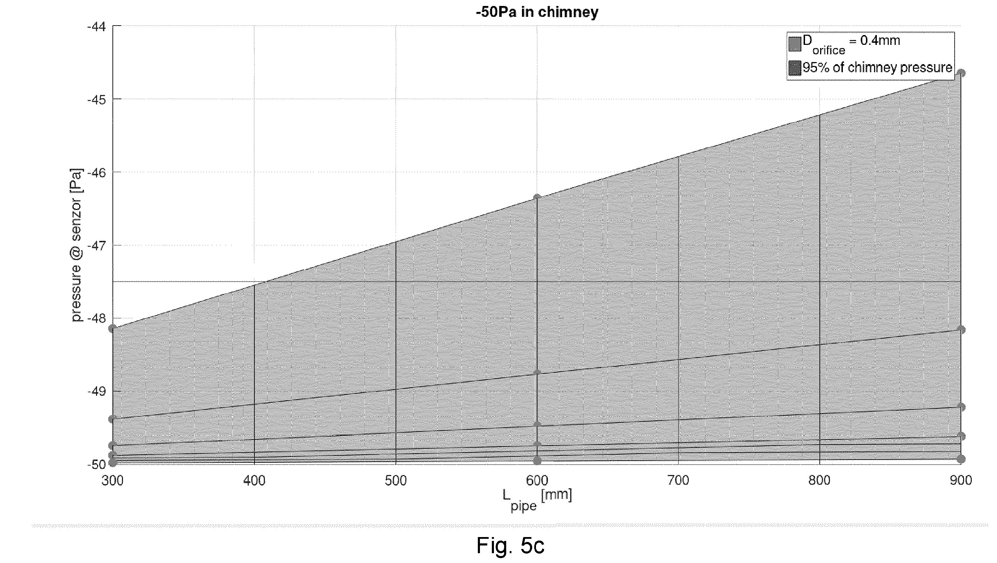

Figs. 5a-c illustrates the effect on the accuracy of the pressure reading at the sensor when the pressure in the chimney, $P_{chimney}$, is reduced to -50 Pa. Like in the simulated results of Figs. 2a-c the orifice diameter, $D_{orifice}$, is held constant at 0.4 mm and the pipe diameter, $D_{pipe}$, and length, $L_{pipe}$, are varied between 3-9 mm and 300-900 mm, respectively. Fig. 5a highlights the 95% accuracy by the 2D profile within the 3D plot. The 95% accuracy being - 47.5 Pa in this case. Similarly, the 95% accuracy is shown in Figs. 5b and 5c as a line at - 47.5 Pa. Further, the sensor measurements exhibit a similar relationship for this -50 Pa pressure to those with -25 Pa pressure in the chimney. Namely, that the decreasing pipe diameter and increasing pipe length results in a higher deviation of pressure from the selected chimney pressure. Again, the length of the pipe has low effect on pressure readings for pipe diameters approximately greater than 6 mm, i.e. ~6-9 mm. Comparing with the -25 Pa chimney pressure, the -50 Pa chimney pressure has a lower error in pressure reading at the sensor, i.e. smaller deviation in pressure, for the same simulated range of parameters.

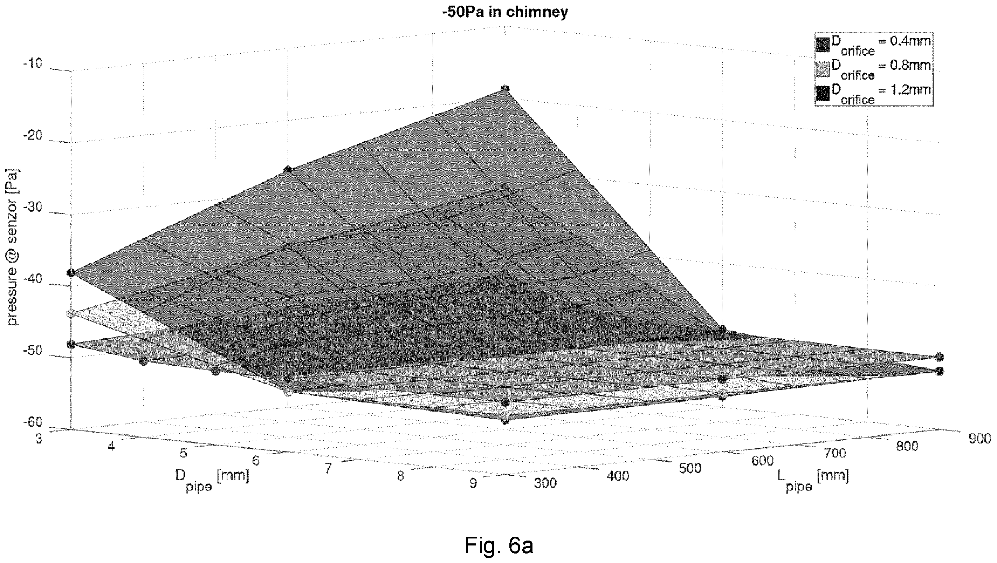

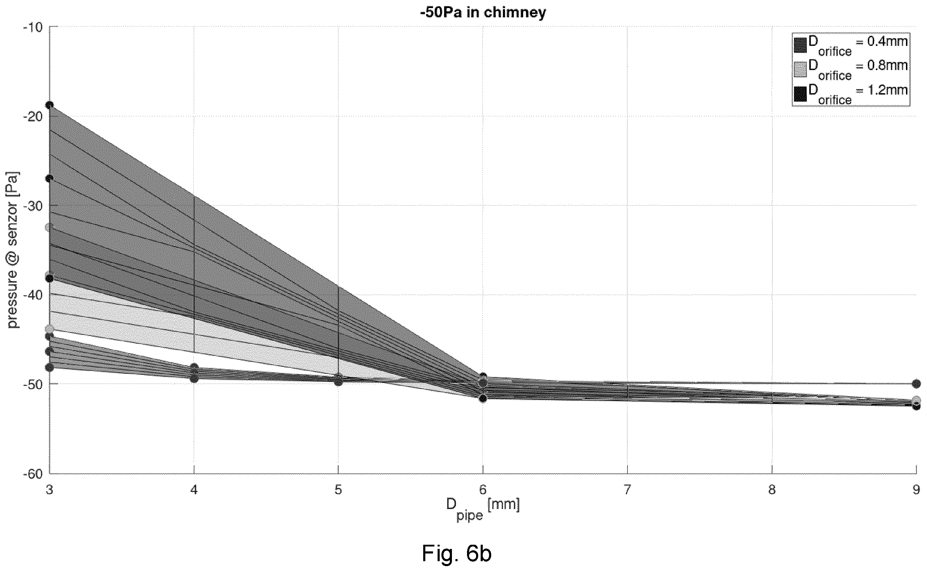

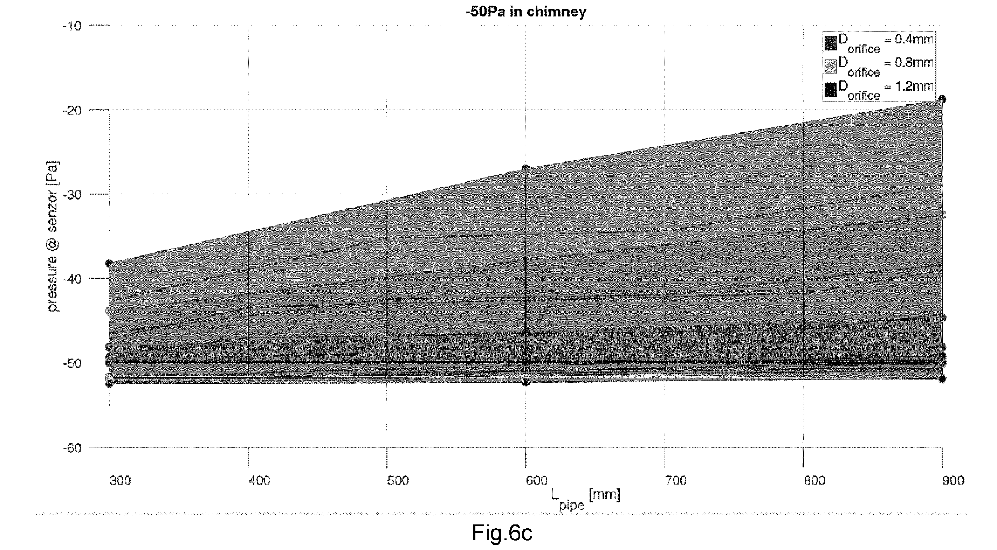

The impact of the orifice diameter on the improved pressure readings for the -50 Pa chimney pressure, when compared to the -25 Pa chimney pressure, is assessed with the same pipe parameters, as shown in Figs. 6a-c. The same selection of orifice diameters are used, i.e. 0.4 mm, 0.8 mm and 1.2 mm, as were simulated in Figs. 4a-c. Again, increasing the diameter of the orifice leads to reduced accuracy in the pressure measured at the sensor. However, the deviation from the acceptable value is lower than in the -25 Pa case, i.e. smaller deviations in pressure measurements to the selected chimney pressure, $P_{chimney}$, especially for the 1.2 mm orifice diameter, $D_{orifice}$,. As such, an orifice diameter, $D_{orifice}$, between 0.4 mm and 0.8 mm provides for acceptable pressure readings for a pipe diameter, $D_{pipe}$, higher than approximately 6 mm and for all pipe lengths, $L_{pipe}$.

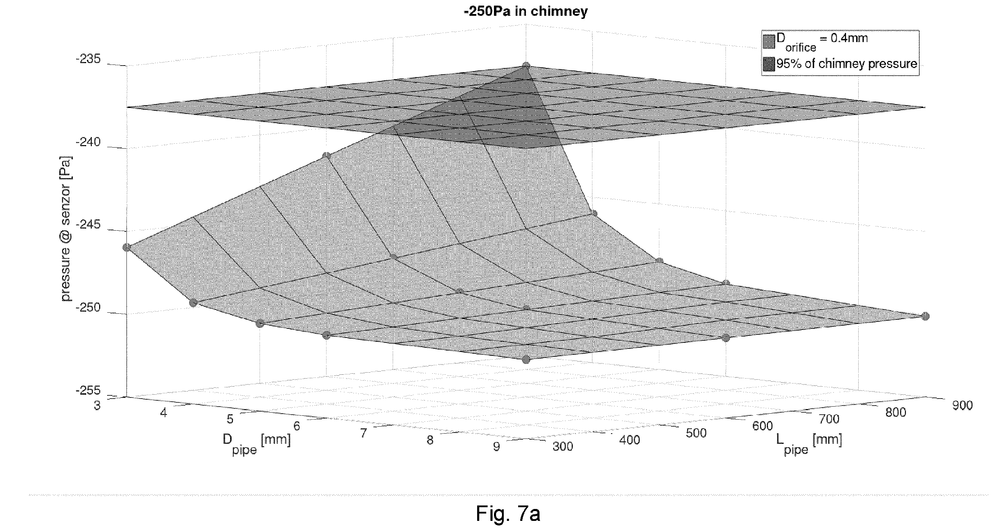

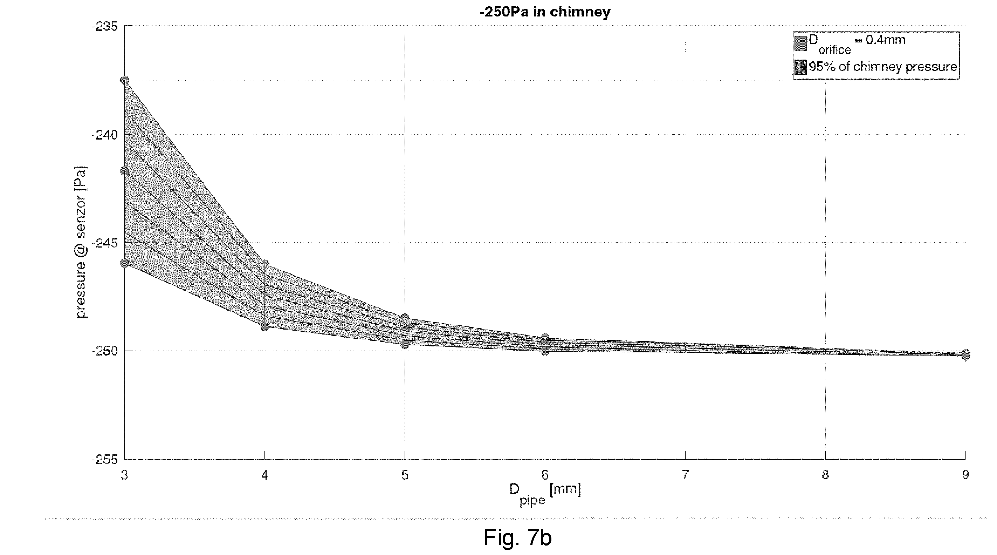

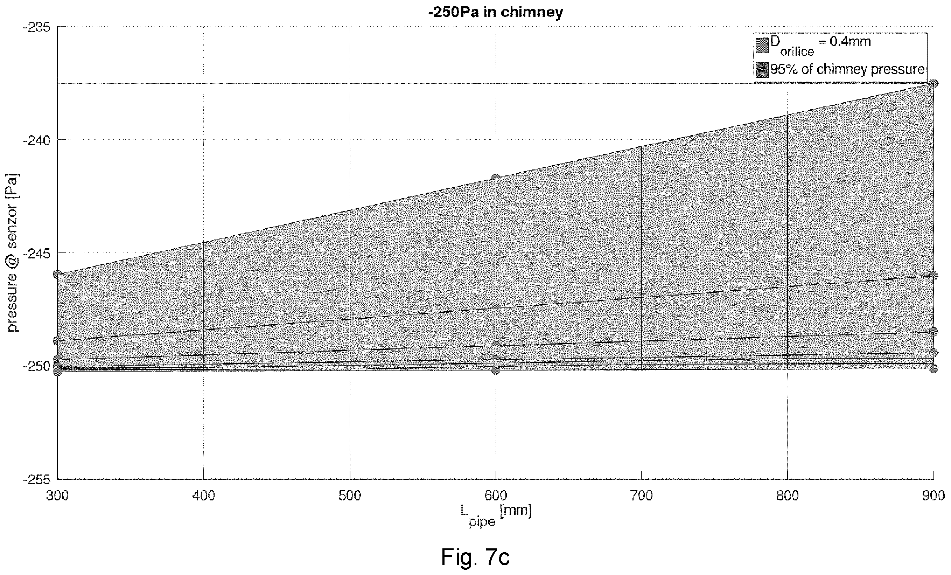

Figs. 7a-c represent similar conditions as to those represented in Figs. 2a-c and Figs. 5a-c but the chimney pressure, $P_{chimney}$, is further reduced to -250 Pa. Again, a decrease in pipe diameter and an increased in pipe length results in a higher deviation of pressure measured at the sensor, as shown in Fig. 7a. Further, the length of pipe has a low effect on the pressure reading for a pipe diameter, $D_{pipe}$, of approximately 6-9 mm. The 95% accuracy of the measured pressure at the sensor is again marked by the 2D profile in the plot of Fig. 7a and a line in the plots of Figs. 7b and 7c. The 95% accuracy pressure value being -237.5 Pa. Even although there is an increase in deviation from the measured value of -250 Pa for pipe parameter values of lower diameter and higher length, all measured pressures are within the 95% accuracy for all simulated pipe parameters. Thus, there is an improved accuracy when decreasing the pressure value of the chimney, from -25 Pa to -50 Pa to -250 Pa, when simulated under the same conditions, i.e. the same range of pipe parameters and constant orifice value.

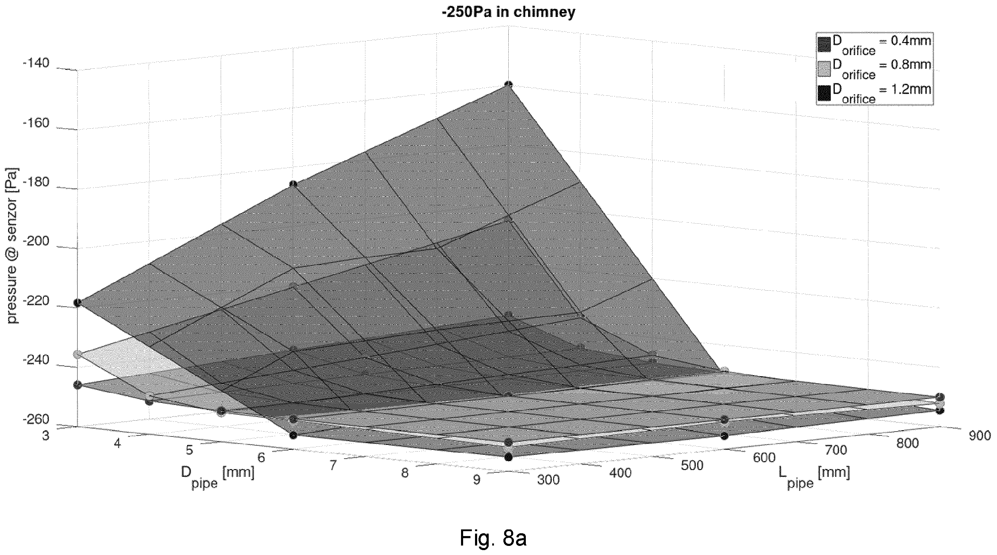

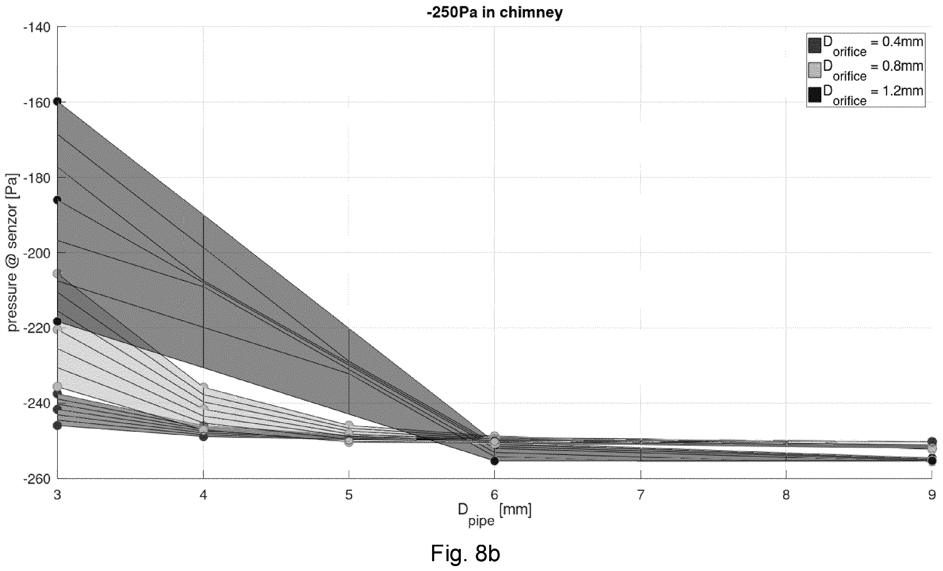

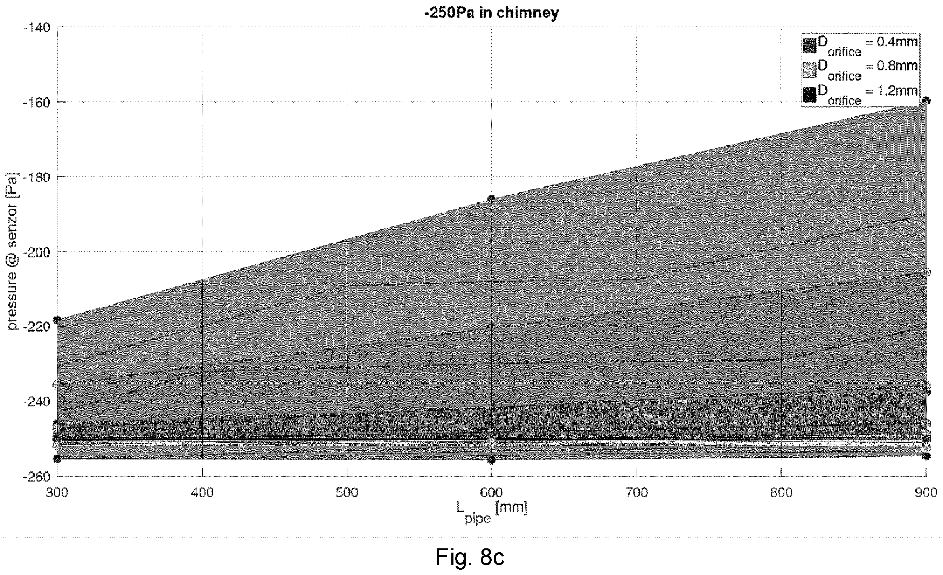

The influence of the various orifice diameters on the accuracy of the pressure measurements at -250 Pa is shown in Figs. 8a-c. The same selection of orifice diameters are used, i.e. 0.4 mm, 0.8 mm and 1.2 mm, as were simulated in Figs. 4a-c and Figs. 6a-c. Again, increasing the diameter of the orifice, $D_{orifice}$, leads to reduced accuracy in the pressure measured at the sensor. Further, the change in deviation of the measured pressure value over the selected parameters is again lower, when compared to the -50 Pa chimney pressure value and the -25 Pa value of the previous simulations. As such, there are even smaller deviations in the pressure measurements from the selected chimney pressure of -250 Pa, especially for the 1.2 mm orifice diameter, $D_{or}$-

$_{ifice}$. Therefore, an orifice diameter, $D_{orifice}$, between 0.4 mm and 0.8 mm provides for acceptable pressure readings for a pipe diameter, $D_{pipe}$, higher than approximately 6 mm and for all pipe lengths, $L_{pipe}$.

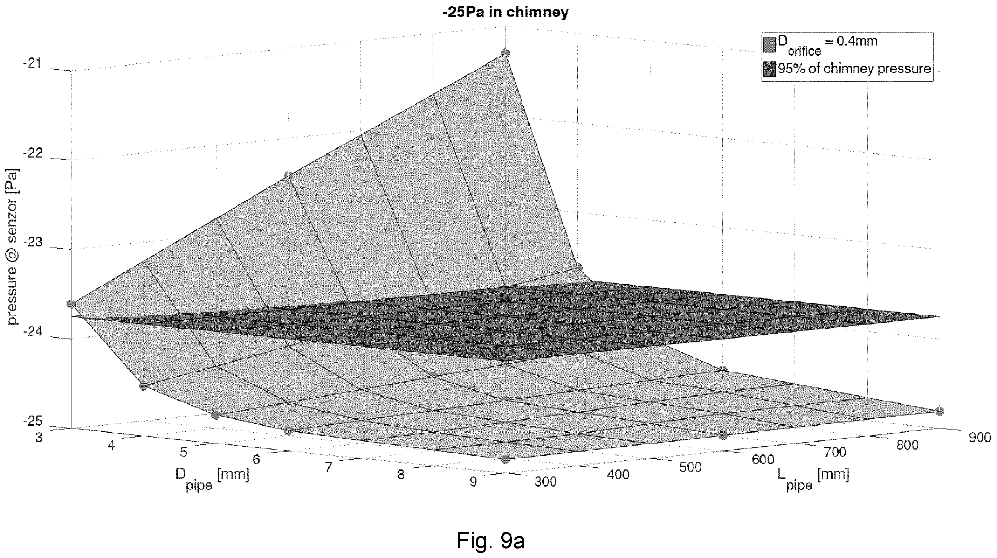

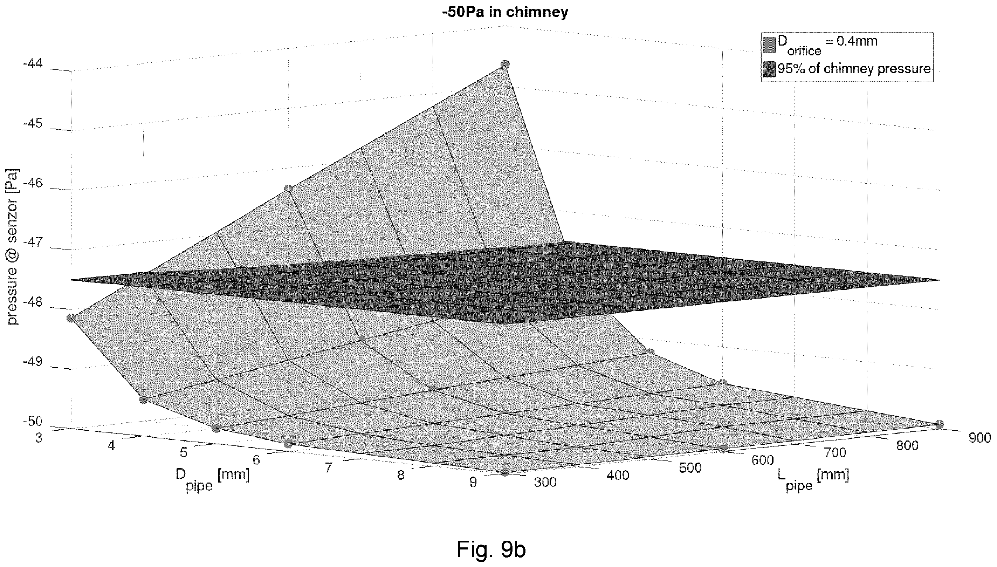

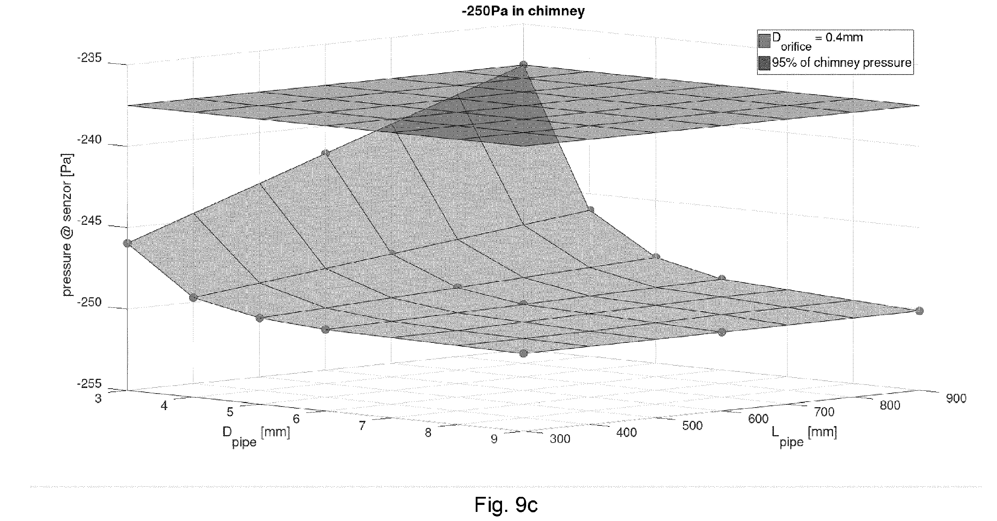

The deviations of the measured pressure value at the sensor from the set pressure are represented by the plots in Figs. 9a-d. Figs. 9a-c are shown with the same conditions as represented by Figs. 2a, 5a and 7a, i.e. orifice diameter of 0.4 mm, pipe diameter 3-9 mm and pipe length 300-900 mm. Figs. 9a-c highlight the decrease in deviation with an increase in chimney pressure, $P_{chimney}$, going from Fig. 9a to Fig. 9b to Fig. 9c which represent -25 Pa, -50 Pa and -250 Pa, respectively. For ease of comparison, the error associated with each of the deviations of the selected chimney pressure values as measured at the sensor is calculated. The error is calculated as:

$$error = \left(1 - \left(\frac{P_{sensor}}{P_{chimney}}\right)\right) \times 100$$

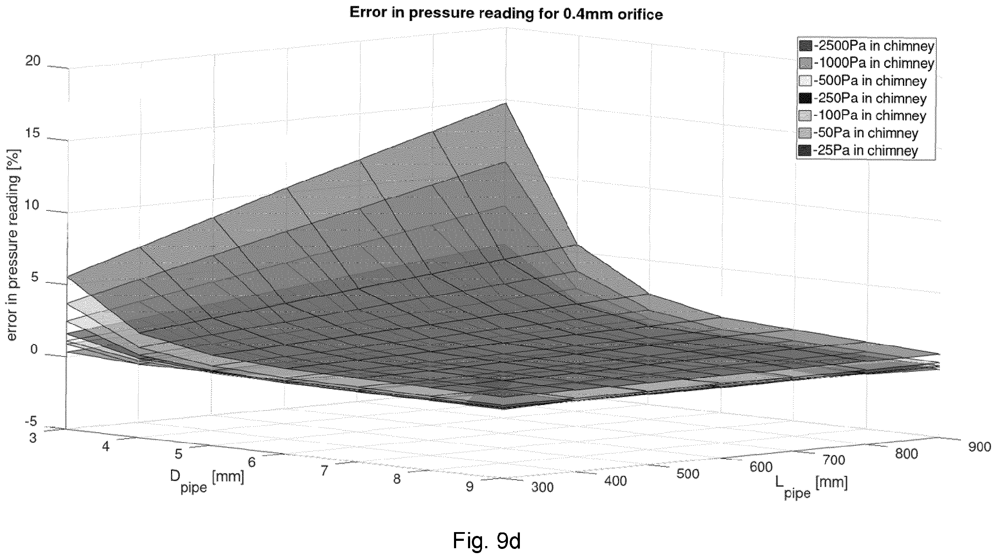

Where $P_{sensor}$ is the measured pressure at the sensor and $P_{chimney}$ is the selected chimney pressure value. Fig. 9d is a 3D plot of the error values in the pressure reading at the sensor for an orifice diameter, $D_{orifice}$, of 0.4 mm, pipe diameter, $D_{pipe}$, 3-9 mm and pipe length, $L_{pipe}$, 300-900 mm. In addition to the error values associated with the -25 Pa, -50 Pa and -250 Pa chimney pressures, Fig. 9d also shows the error values for the same conditions but with - 100 Pa, -500 Pa, -1000 Pa and -2500 Pa chimney pressures. As such the plot shows a decrease in error of pressure reading for a decreased chimney pressure, i.e. a higher pressure difference between the inside of the chimney and the external atmosphere. Thus, this pressure sensing device is well suited for low pressure environments, providing higher accuracy pressure readings while protecting the sensing element of the pressure sensor from the polluted environment of the chimney.

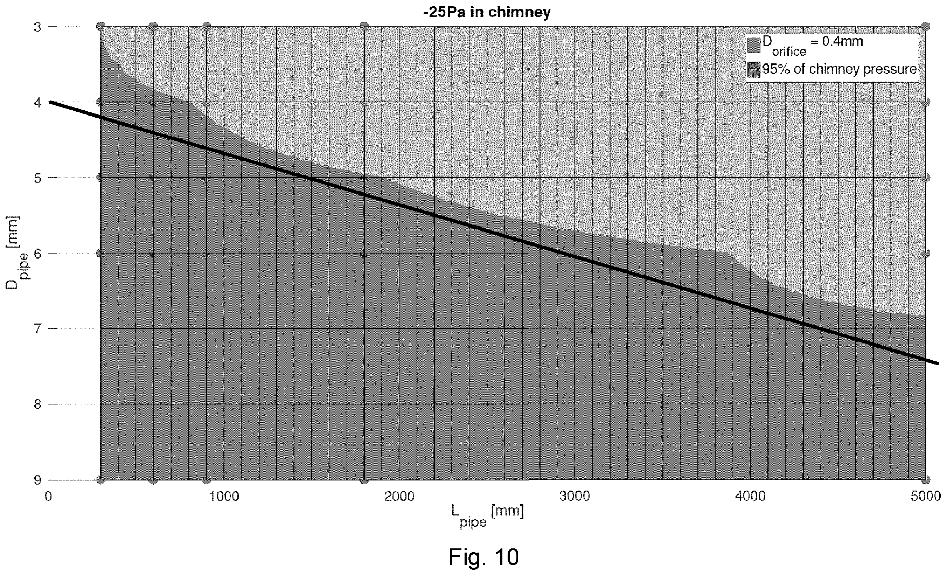

For the preferred pressure sensing applications associated with this invention the pressure is at the higher end of the pressure range simulated, i.e. -25 Pa and -50 Pa. As such, Fig. 10 shows a plot of the optimum pipe parameters for a chimney pressure, $P_{chimney}$, of -25 Pa and an orifice diameter, $D_{orifice}$, of 0.4 mm. A relationship between the diameter of the pipe and the length of the pipe is found to be:

$$D_{pipe} < 0.00075 L_{pipe} + 4$$

Wherein $D_{pipe}$ is the diameter of the pipe and $L_{pipe}$ is the length of the pipe and the values are recorded in millimetres. The relationship of pipe diameter to pipe length allows for extensive combinations of pipe configurations while maintaining a high accuracy/low error measurement reading at the sensor. The above equation is presented on the plot in Fig. 10 by the black solid line. It is clear that this is well within the 95% accuracy threshold for measuring the chimney pressure. Thus, any configuration of values under this line has an acceptable tolerance for measuring the pressure of the chimney at the sensor.

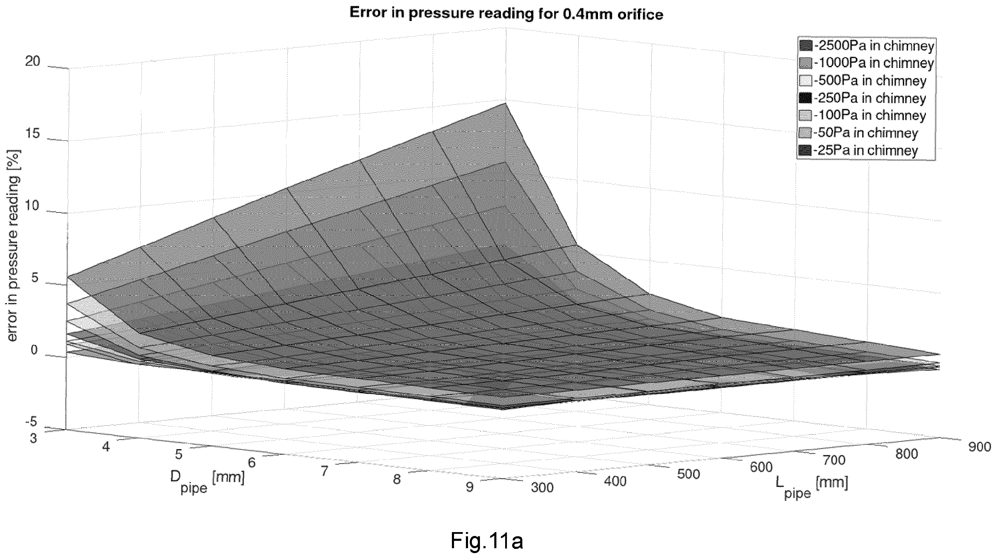

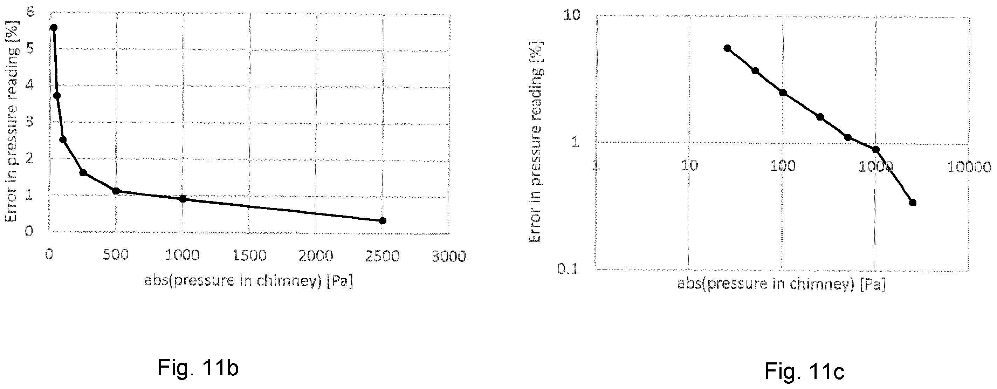

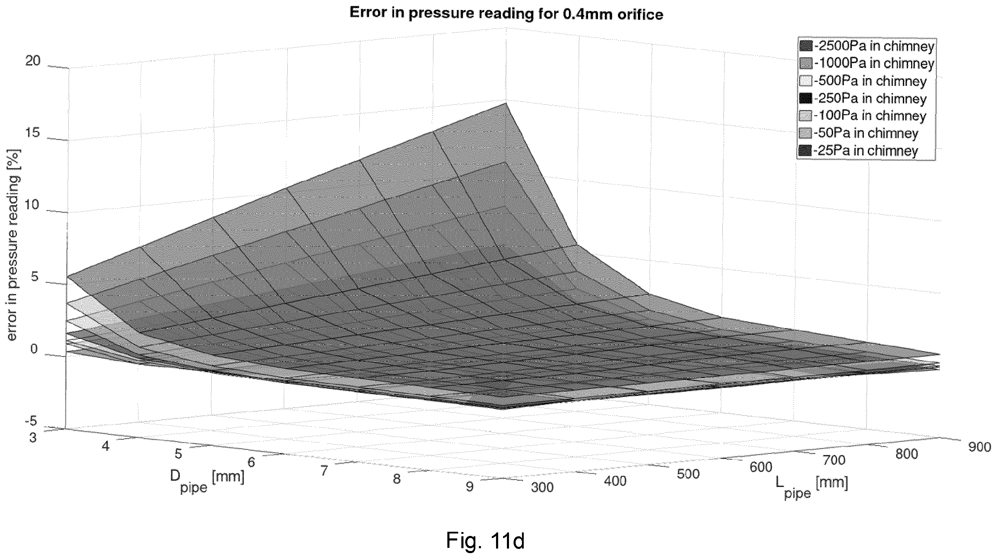

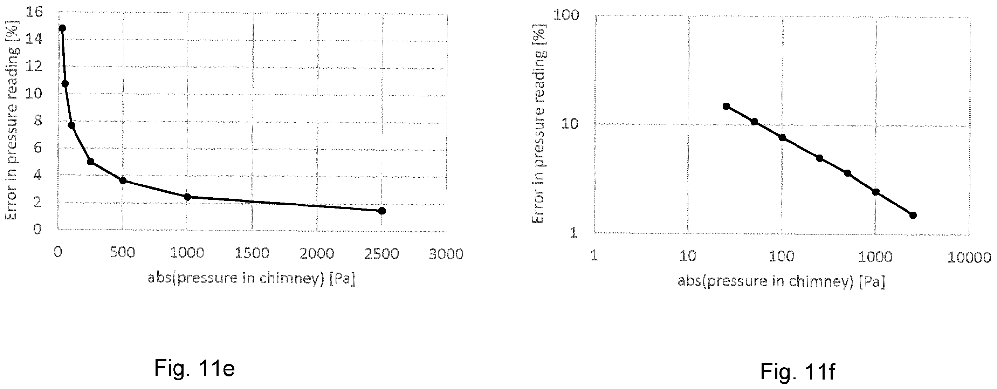

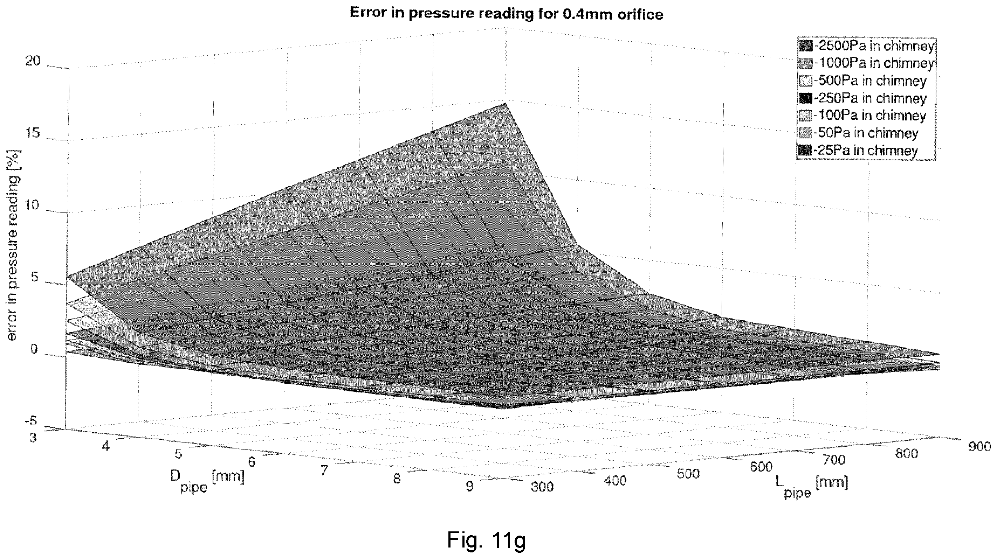

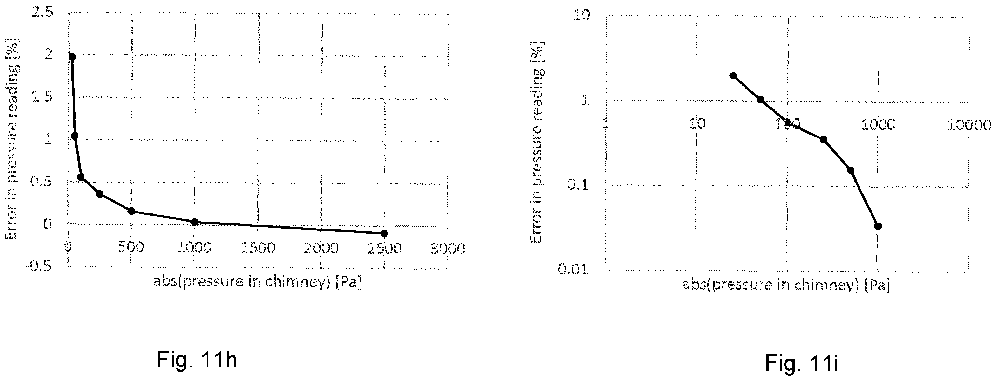

Figs. 11a-i show the error in reading the pressure at the sensor for selected combinations of pipe length, $L_{pipe}$, and diameter over a range of chimney pressures. The orifice diameter, $D_{orifice}$, is fixed at 0.4 mm for all simulations. Different conditions have been selected to assess the impact of the change in chimney pressure on the error reading of the pressure measured at the sensor under such conditions. Figs. 11a-c are results of a pipe configuration approximate the 95% accuracy value at a starting chimney pressure, $P_{chimney}$, of -25 Pa, as shown in Fig. 10. The pipe parameters are 3 mm for pipe diameter, $D_{pipe}$, and 300 mm for pipe length, $L_{pipe}$. Figs. 11d-f show the results when the pipe configuration is outside the 95% accuracy value at a starting chimney pressure of -25 Pa. The parameters in this case are 3 mm pipe diameter, $D_{pipe}$, and 900 mm pipe length, $L_{pipe}$. Fig. 10 shows this configuration on the upper right section of the plot, i.e. outside the 95% accuracy threshold. Figs. 11g-i are the results of a pipe configuration inside the 95% accuracy threshold, where the pipe diameter, $D_{pipe}$, is 5 mm and the pipe length, $L_{pipe}$, is 600 mm. Again this can be easily seen in the plot in Fig. 10 where this pipe configuration lies in the lower left section of the plot, i.e. inside the 95% accuracy threshold. It is clear that all of the selected combinations have a negative exponential drop in the error reading with increasing chimney pressure. This reduction in error value is clear in the logarithmic plots of Figs. 11c, 11f and 11i. From these results, it can be deduced that even if the pipe configuration is outside the 95% accuracy threshold for a low pressure value, e.g. -25 Pa, it can be used for chimney pressures of decreased value, e.g. -500 Pa.

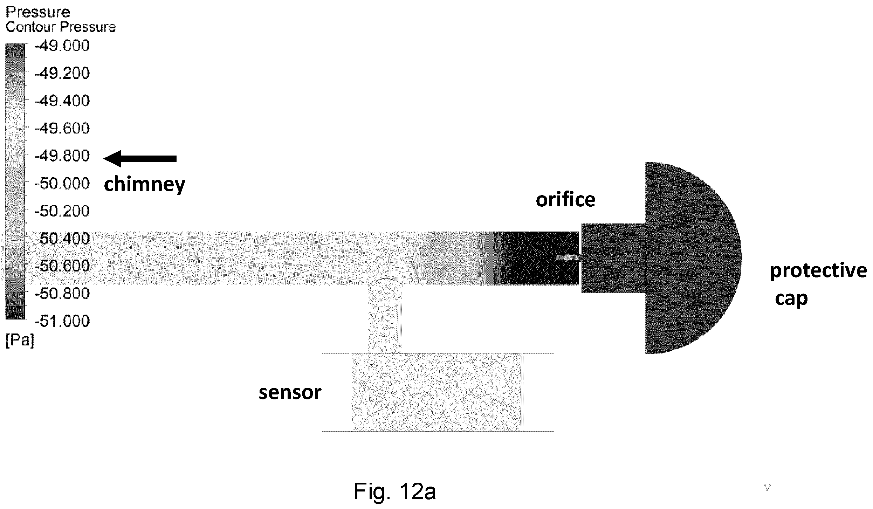

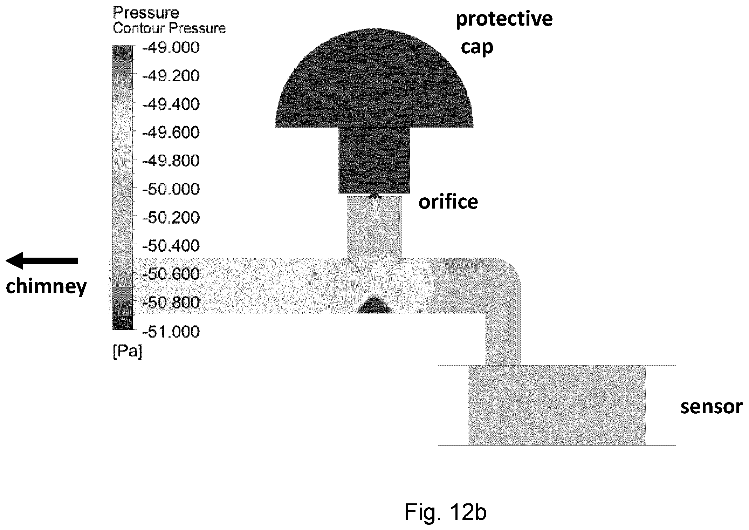

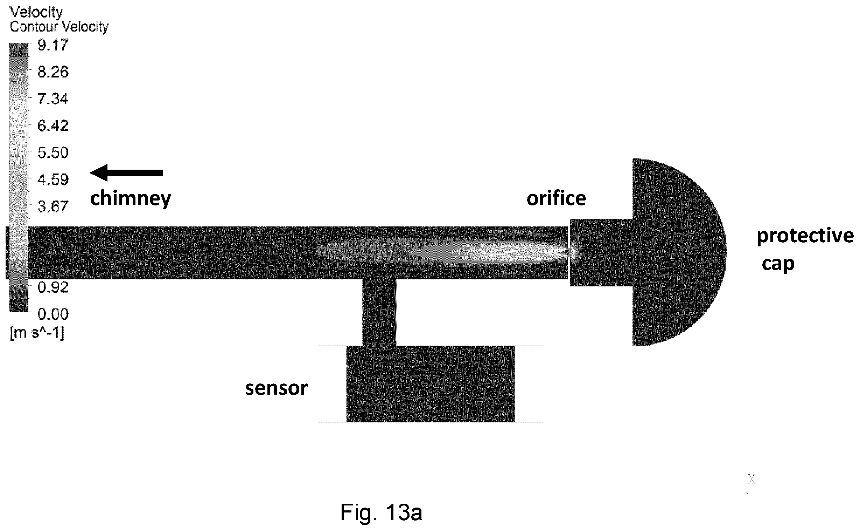

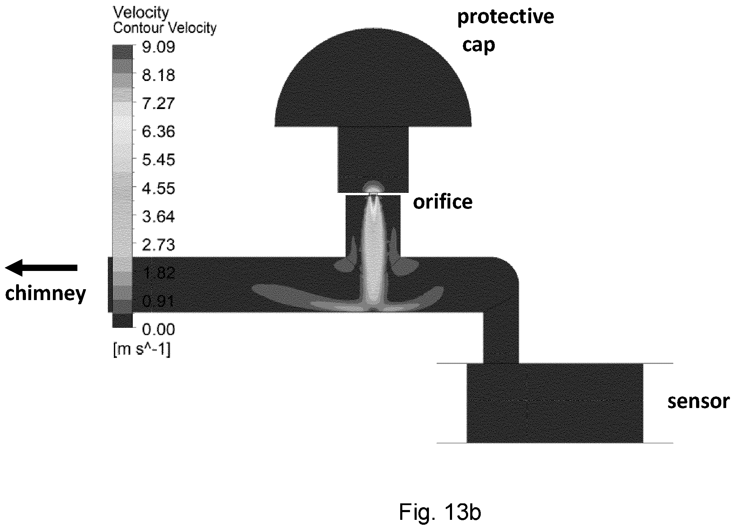

Figs. 12a and b show the pressure variations within the pressure sensing device for optimum pipe and orifice parameters. The parameters are: $D_{pipe}$ = 3 mm, $L_{pipe}$ = 300 mm and $D_{orifice}$ = 0.4 mm. Fig.12a shows the pressure sensing device with the inline configuration and Fig. 12b shows the alternative L-shaped (12b) configuration. The chimney pressure, $P_{chimney}$, is set at -50 Pa. In both Figs. 12a and 12b the influence of the external atmospheric pressure injecting into the orifice opening is shown. The air flowing inside the opening of the pipe, i.e. inside the first or second elongated hollow member, protects the contaminants from the chimney reaching the sensor. This shown more clearly in Figs. 13a and b. The pressure measured by the sensor for the inline configuration, i.e. in Fig. 12a, is -49.57 Pa which is an accuracy of over 99%. The pressure measured by the sensor in the L-shaped configuration is -49.30, which is a slightly higher deviation than the inline configuration. However, the accuracy is still over 98%, making it more than acceptable as a pressure sensing device. As indicated in Figs. 12a and b, a protective cap may be attached to the orifice end of the pressure sensing device to protect from any debris getting into the device.

Figs. 13a and b are diagrams of the velocity variations within the pressure sensing device for the same optimum pipe and orifice parameters as chosen in Figs. 12a and b. Both the inline (Fig. 13a) and L-shaped (Fig. 13b) configurations are shown. These diagrams show the influence of the external air flow being injected into the pipe, highlighting the function of the orifice opening in protecting the sensor. Air flow rushes in through the orifice and pushes the contaminants and pollutants back down the pipe towards the chimney while still allowing the pressure of the chimney to be measured by the sensor. Therefore, the contaminants do not reach the sensor or sensing element and the sensing element is protected from any damages or debris covering the sensor. Thus, the lifetime of the senor and the efficiency of the sensor is prolonged. As in Figs. 12a and b, a protective cap can be attached to the orifice end of the pressure sensing device to protect any debris getting into the device, as shown in Figs. 13a and b.

The pressure sensing device as discussed throughout this document may be manufactured in a number of ways as separate components or as a single component. One manufacturing possibility is to 3D print the component parts either individually or as a single unit. The sensing element would be incorporated into the device after the manufacturing of the components if produced via 3D printing.

From the foregoing, it will be observed that numerous variations and modifications may be effected without departing from the scope of the invention, as defined by the claims. It is to be understood that no limitation with respect to the specific device or method described herein is intended or should be inferred. It is, of course, intended to cover all such modifications as fall within the scope of the invention.

**Claims**

1. A pressure sensing device, comprising:

   a first elongated hollow member comprising a first opening located at a first end of the first elongated hollow member,
   a second opening located at a second end opposite to the first end of the elongate hollow member;
   a third opening located at between the first and the second end of the hollow member, and
   a second elongated hollow member, the second elongate hollow member being connected to the first elongated hollow member via the third opening, wherein the first opening being configured to connect the inside of the second elongated member to the inside of a third hollow member, one of the free end of the second elongated member or third opening being configured to open out to external atmospheric pressure ($p_{atm}$) through an aperture having a diameter ($D_{orifice}$) of maximum 1.2 mm; and a pressure sensing element ($P_{Sensor}$) being connected to the other one of the free end of the second elongated member or the third opening, **characterised in that** the aperture is formed by an orifice plate.

2. The pressure sensing device according to claim 1, wherein the diameter ($D_{orifice}$) of the aperture is between 0.4 mm and 1.2 mm, preferably 0.4 mm, 0.5 mm, 0.6 mm, 0.7 mm, 0.8 mm, 0.9 mm, 1.0 mm, 1.1 mm or 1.2 mm.

3. The pressure sensing device according to claim 1 or 2, wherein the pressure inside the third hollow member ($p_{chimney}$) is not below -47200 Pa, more preferably between -25 Pa and -2500Pa.

4. The pressure sensing device according to any of claims 1 to 3, wherein the first elongated hollow member comprises a first portion with a first length ($L_{pipe}$) and a first inner diameter ($D_{pipe}$) and a second portion with a second length and a second inner diameter.

5. The pressure sensing device according to claim 4, wherein the first portion is located at the first end of the first elongated hollow member.

6. The pressure sensing device according to claim 4 or 5, wherein the inner diameter of the first portion ($D_{pipe}$) is different from the inner diameter of the second portion, preferably wherein the first inner diameter is bigger than the second inner diameter.

7. The pressure sensing device according to claim 6, wherein the inner diameter of the first portion ($D_{pipe}$) is between 3 mm and 9 mm, preferably between 4 mm and 6 mm, more preferably 5 mm.

8. The pressure sensing device according to any of claims 4 to 7, wherein the length of the first portion ($L_{pipe}$) is up to 5000 mm, preferably between 300 mm and 900 mm, more preferably 600 mm.

9. The pressure sensing device according to claim 4, wherein the inner diameter of the second portion is approximately 3 mm.

10. The pressure sensing device according to claim 9, wherein the length of the second portion is not more than 50 mm.

**11.** The pressure sensing device according to any of the preceding claims, wherein the pressure sensing element is connected to the free end of the second elongated member and the third opening is configured to open out to external atmospheric pressure ($p_{iatm}$) with the aperture.

**12.** The pressure sensing device according to any of the preceding claims, wherein the third hollow member is a flue.

**13.** A method for measuring pressure ($p_{chimney}$) in a flue, the method comprising:
positioning a pressure sensing element outside a flue using a pressure sensing device according to any of claims 1 to 12.

**14.** A computer-readable medium having computer-executable instructions adapted to cause a 3D printer to print a device according to any of claims 1 to 12.

**Patentansprüche**

**1.** Eine Drucksensorvorrichtung, die Folgendes beinhaltet:

ein erstes längliches Hohlelement, das Folgendes beinhaltet:

eine erste Öffnung, die sich an einem ersten Ende des ersten länglichen Hohlelements befindet,
eine zweite Öffnung, die sich an einem zweiten Ende gegenüber dem ersten Ende des länglichen Hohlelements befindet;
eine dritte Öffnung, die sich zwischen dem ersten und dem zweiten Ende des Hohlelements befindet, und

ein zweites längliches Hohlelement, wobei das zweite längliche Hohlelement mit dem ersten länglichen Hohlelement über die dritte Öffnung verbunden ist,
wobei die erste Öffnung dazu konfiguriert ist, die Innenseite des zweiten länglichen Elements mit der Innenseite eines dritten Hohlelements zu verbinden,
eines von dem freien Ende des zweiten länglichen Elements oder der dritten Öffnung dazu konfiguriert ist, sich zu dem äußeren atmosphärischen Druck ($p_{atm}$) durch einen Durchlass, der einen Durchmesser ($D_{orifice}$) von maximal 1,2 mm aufweist, zu öffnen; und
ein Drucksensorelement ($P_{Sensor}$), das mit dem anderen von dem freien Ende des zweiten länglichen Elements oder der dritten Öffnung verbunden ist, **dadurch gekennzeichnet, dass** der Durchlass durch eine Messblende gebildet wird.

**2.** Drucksensorvorrichtung gemäß Anspruch 1, wobei der Durchmesser ($D_{orifice}$) des Durchlasses zwischen 0,4 mm und 1,2 mm, vorzugsweise 0,4 mm, 0,5 mm, 0,6 mm, 0,7 mm, 0,8 mm, 0,9 mm, 1,0 mm, 1,1 mm oder 1,2 mm beträgt.

**3.** Drucksensorvorrichtung gemäß Anspruch 1 oder 2, wobei der Druck im Inneren des dritten Hohlelements ($p_{chimney}$) nicht unter -47200 Pa, besonders vorzugsweise zwischen -25 Pa und -2500 Pa liegt.

**4.** Drucksensorvorrichtung gemäß einem der Ansprüche 1 bis 3, wobei das erste längliche Hohlelement einen ersten Abschnitt mit einer ersten Länge ($L_{pipe}$) und einem ersten Innendurchmesser ($D_{pipe}$) und einen zweiten Abschnitt mit einer zweiten Länge und einem zweiten Innendurchmesser beinhaltet.

**5.** Drucksensorvorrichtung gemäß Anspruch 4, wobei sich der erste Abschnitt an dem ersten Ende des ersten länglichen Hohlelements befindet.

**6.** Drucksensorvorrichtung gemäß Anspruch 4 oder 5, wobei der Innendurchmesser des ersten Abschnitts ($D_{pipe}$) sich vom Innendurchmesser des zweiten Abschnitts unterscheidet, vorzugsweise wobei der erste Innendurchmesser größer ist als der zweite Innendurchmesser.

**7.** Drucksensorvorrichtung gemäß Anspruch 6, wobei der Innendurchmesser des ersten Abschnitts ($D_{pipe}$) zwischen 3 mm und 9 mm, vorzugsweise zwischen 4 mm und 6 mm, besonders bevorzugt 5 mm, beträgt.

**8.** Drucksensorvorrichtung gemäß einem der Ansprüche 4 bis 7, wobei die Länge des ersten Abschnitts ($L_{pipe}$) bis zu 5000 mm, vorzugsweise zwischen 300 mm und 900 mm, besonders bevorzugt 600 mm, beträgt.

**9.** Drucksensorvorrichtung gemäß Anspruch 4, wobei der Innendurchmesser des zweiten Abschnitts etwa 3 mm beträgt.

**10.** Drucksensorvorrichtung gemäß Anspruch 9, wobei die Länge des zweiten Abschnitts nicht mehr als 50 mm beträgt.

**11.** Drucksensorvorrichtung gemäß einem der vorhergehenden Ansprüche, wobei das Drucksensorelement mit dem freien Ende des zweiten länglichen Elements verbunden ist und die dritte Öffnung dazu konfiguriert ist, sich zu dem äußeren atmosphärischen Druck ($p_{iatm}$) mit dem Durchlass zu öffnen.

**12.** Drucksensorvorrichtung gemäß einem der vorhergehenden Ansprüche, wobei das dritte Hohlelement ein Abzug ist.

**13.** Ein Verfahren zum Messen von Druck ($p_{chimney}$) in einem Abzug, wobei das Verfahren Folgendes beinhaltet:
Positionieren eines Drucksensorelements außerhalb eines Abzugs unter Verwendung einer Drucksensorvorrichtung gemäß einem der Ansprüche 1 bis 12.

**14.** Ein computerlesbares Medium mit computerausführbaren Anweisungen, die dazu angepasst sind, einen 3D-Drucker dazu zu veranlassen, eine Vorrichtung gemäß einem der Ansprüche 1 bis 12 zu drucken.

**Revendications**

**1.** Un dispositif de détection de pression, comprenant :

un premier élément creux allongé comprenant

une première ouverture située au niveau d'une première extrémité du premier élément creux allongé,
une deuxième ouverture située au niveau d'une deuxième extrémité opposée à la première extrémité de l'élément creux allongé ;
une troisième ouverture située entre la première et la deuxième extrémité de l'élément creux, et

un deuxième élément creux allongé, le deuxième élément creux allongé étant raccordé au premier élément creux allongé par le biais de la troisième ouverture,
la première ouverture étant configurée pour raccorder l'intérieur du deuxième élément allongé à l'intérieur d'un troisième élément creux,
une extrémité parmi l'extrémité libre du deuxième élément allongé et l'extrémité libre de la troisième ouverture étant configurée pour s'ouvrir à la pression atmosphérique extérieure ($p_{atm}$) à travers un trou ayant un diamètre ($D_{orifice}$) de 1,2 mm maximum ; et
un élément de détection de pression ($P_{capteur}$) raccordé à l'autre extrémité parmi l'extrémité libre du deuxième élément allongé et l'extrémité libre de la troisième ouverture, **caractérisé en ce que** le trou est formé par une plaque à orifices.

**2.** Le dispositif de détection de pression selon la revendication 1, dans lequel le diamètre ($D_{orifice}$) du trou est compris entre 0,4 mm et 1,2 mm, de préférence 0,4 mm, 0,5 mm, 0,6 mm, 0,7 mm, 0,8 mm, 0,9 mm, 1,0 mm, 1,1 mm ou 1,2 mm.

**3.** Le dispositif de détection de pression selon la revendication 1 ou la revendication 2, dans lequel la pression à l'intérieur du troisième élément creux ($P_{cheminée}$) n'est pas en deçà de -47 200 Pa, étant plus préférablement comprise entre -25 Pa et -2 500 Pa.

**4.** Le dispositif de détection de pression selon n'importe lesquelles des revendications 1 à 3, dans lequel le premier élément creux allongé comprend une première portion présentant une première longueur ($L_{tuyau}$) et un premier diamètre interne ($D_{tuyau}$) et une deuxième portion présentant une deuxième longueur et un deuxième diamètre interne.

**5.** Le dispositif de détection de pression selon la revendication 4, dans lequel la première portion est située au niveau de la première extrémité du premier élément creux allongé.

**6.** Le dispositif de détection de pression selon la revendication 4 ou la revendication 5, dans lequel le diamètre interne de la première portion ($D_{tuyau}$) est différent du diamètre interne de la deuxième portion, de préférence dans lequel le premier diamètre interne est plus grand que le deuxième diamètre interne.

**7.** Le dispositif de détection de pression selon la revendication 6, dans lequel le diamètre interne de la première portion ($D_{tuyau}$) est compris entre 3 mm et 9 mm, de préférence entre 4 mm et 6 mm, plus préférablement de 5 mm.

**8.** Le dispositif de détection de pression selon n'importe lesquelles des revendications 4 à 7, dans lequel la longueur de la première portion ($L_{tuyau}$) va jusqu'à 5 000 mm, étant de préférence comprise entre 300 mm et 900 mm, plus préférablement de 600 mm.

**9.** Le dispositif de détection de pression selon la revendication 4, dans lequel le diamètre interne de la deuxième portion est approximativement de 3 mm.

**10.** Le dispositif de détection de pression selon la revendication 9, dans lequel la longueur de la deuxième portion n'est pas supérieure à 50 mm.

**11.** Le dispositif de détection de pression selon n'importe lesquelles des revendications précédentes, dans lequel l'élément de détection de pression est raccordé à l'extrémité libre du deuxième élément allongé et la troisième ouverture est configurée pour s'ouvrir à la pression atmosphérique extérieure ($p_{iatm}$) avec le trou.

12. Le dispositif de détection de pression selon n'importe lesquelles des revendications précédentes, dans lequel le troisième élément creux est un conduit de fumée.

13. Un procédé pour mesurer la pression ($P_{cheminée}$) dans un conduit de fumée, le procédé comprenant : le positionnement d'un élément de détection de pression à l'extérieur d'un conduit de fumée à l'aide d'un dispositif de détection de pression selon n'importe lesquelles des revendications 1 à 12.

14. Un support lisible par ordinateur ayant des instructions exécutables par ordinateur conçues pour amener une imprimante 3D à imprimer un dispositif selon n'importe lesquelles des revendications 1 à 12.

Fig. 1

Fig. 2a

Fig. 2b

Fig. 2c

Fig. 3

Fig. 4a

Fig. 4b

Fig. 4c

Fig. 5a

Fig. 5a

EP 4 067 853 B1

Fig. 5c

Fig. 6a

Fig. 6b

Fig.6c

EP 4 067 853 B1

Fig. 7a

EP 4 067 853 B1

Fig. 7b

Fig. 7c

Fig. 8a

EP 4 067 853 B1

Fig. 8b

Fig. 8c

Fig. 9a

**-50Pa in chimney**

Fig. 9b

-250Pa in chimney

Fig. 9c

EP 4 067 853 B1

Fig. 9d

Fig. 10

Fig.11a

Fig. 11c

Fig. 11b

Error in pressure reading for 0.4mm orifice

Fig. 11d

Fig. 11f

Fig. 11e

Fig. 11g

Fig. 11h

Fig. 11i

EP 4 067 853 B1

Fig. 12a

Pressure
Contour Pressure

-49.000
-49.200
-49.400
-49.600
-49.800
-50.000
-50.200
-50.400
-50.600
-50.800
-51.000
[Pa]

protective
cap

orifice

chimney

sensor

Fig. 12b

Fig. 13a

Fig. 13b

**EP 4 067 853 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5456124 A

- EP 1081435 A2